# EUROPÄISCHE PATENTSCHRIFT

(11) **EP 0 885 353 B1**
(45) Veröffentlichungstag und Bekanntmachung des Hinweises auf die Patenterteilung: **04.04.2001**
(21) Anmeldenummer: 96946091.4
(22) Anmeldetag: 18.12.1996
(51) Int. Cl.: F02D 33/02, F02D 23/02

(54) **VERFAHREN UND ANORDNUNG ZUM STEUERN ODER REGELN DER LEISTUNG EINER AUFLADBAREN BRENNKRAFTMASCHINE**
METHOD AND ARRANGEMENT FOR CONTROLLING OR REGULATING THE POWER OF A SUPERCHARGEABLE INTERNAL COMBUSTION ENGINE
PROCEDE ET DISPOSITIF DE COMMANDE OU DE REGULATION DE LA PUISSANCE D'UN MOTEUR A COMBUSTION INTERNE POUVANT ETRE SURALIMENTE

(30) Priorität: 06.03.1996 DE 19608630
(43) Veröffentlichungstag der Anmeldung: 23.12.1998
(73) Patentinhaber: ROBERT BOSCH GMBH, 70442 Stuttgart (DE)
(72) Erfinder: BÄUERLE, Michael, D-71706 Markgröningen (DE); HESS, Werner, D-70499 Stuttgart (DE)
(86) Internationale Anmeldenummer: DE9602438
(87) Internationale Veröffentlichungsnummer: WO9733081

(56) Entgegenhaltungen:
- EP-A- 0 683 308
- DE-A- 3 939 754
- DE-A- 4 330 368
- DE-C- 4 025 901
- FR-A- 2 512 497

## Beschreibung

### Stand der Technik

Die vorliegende Erfindung betrifft ein Verfahren und eine Anordnung zur Steuern oder Regeln der Leistung einer aufladbaren Brennkraftmaschine durch Steuerung oder Reglung der Stellung einer im Saugrohr vorhandenen Drosselklappe und des Ladedrucks.

Ein derartiges Verfahren ist aus der DE 43 30 368 A1 bekannt. Nach diesem Stand der Technik werden der Ladedruck und die Drosselklappenstellung unabhängig voneinander jeweils in Abhängigkeit des Fahrerwunsches oder eines Vorgabewertes eines Fahrgeschwindigkeitsreglers eingestellt. In einem ersten Bereich des Fahrerwunsches bzw. des Vorgabewertes des Fahrgeschwindigkeitsreglers erfolgt die Leistungssteuerung hauptsächlich auf der Basis der Einstellung der Drosselklappe, und in einem zweiten Bereich des Fahrerwunsches bzw. des Vorgabewertes des Fahrgeschwindigkeitsreglers wird die Einstellung der Leistung hauptsächlich auf der Basis des Ladedrucks vorgenommen. Es kann auch noch einen dritten Bereich zwischen dem ersten und dem zweiten Bereich geben, in dem eine gemeinsame Einstellung von Drosselklappe und Ladedruck abhängig vom Fahrerwunsch erfolgt. Die Abhängigkeiten der Drosselklappenstellung und des Ladedrucks von der Fahrpedalstellung werden so gewählt, daß im jeweiligen Betriebszustand eine mit Blick auf Leistung und Kraftstoffverbrauch optimale Zylinderfüllung erreicht wird.

Der Erfindung liegt die Aufgabe zugrunde, ein Verfahren beziehungsweise eine Anordnung zum Steuern oder Regeln der Leistung einer aufladbaren Brennkraftmaschine anzugeben, womit einerseits eine gute Fahrbarkeit und andererseits ein optimaler Wirkungsgrad erzielt werden kann.

### Vorteile der Erfindung

Erfindungsgemäß wird die Aufgabe mit den Merkmalen des Anspruchs 1 beziehungsweise 7 dadurch gelöst, daß aus einem vorgegebenen Füllungs-Sollwert eine Stellgröße für die Drosselklappe im Saugrohr der Brennkraftmaschine abgeleitet wird, daß aus dem Füllungs-Sollwert ein Saugrohrdruck-Sollwert abgeleitet wird und daß ein Ladedruck-Sollwert durch Verknüpfen des Saugrohrdruck-Sollwertes mit einer Größe abgeleitet wird, welche einen Druckabfall an der Drosselklappe vorgibt.

Der Druckabfall an der Drosselklappe kann auf einfache Weise so gesteuert werden, daß dem Fahrerwunsch entsprechend entweder die Fahrbarkeit oder der Wirkungsgrad der Maschine optimiert wird; d.h. daß einerseits ein sehr sportlicher und andererseits ein sehr wirtschaftlicher Fahrmodus möglich ist.

Vorteilhafte Weiterbildungen der Erfindung gehen aus den Unteransprüchen hervor.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Übersichtsblockschaltbild, das die Steuerung einer Brennkraftmaschine verdeutlicht,
Figur 2 ein Blockschaltbild für die Steuerung der Drosselklappenstellung und des Ladedrucks,
Figur 3 ein Blockschaltbild, das die Herleitung eines Ladedruck-Sollwertes darstellt.

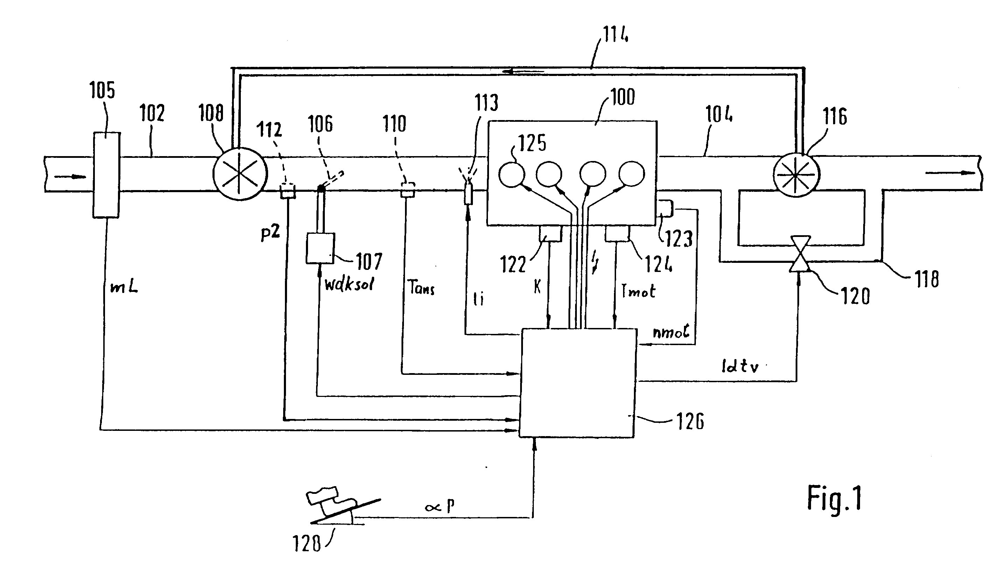

Die Figur 1 zeigt eine Brennkraftmaschine 100 mit einem Ansaugtrakt 102 und einem Abgaskanal 104. Im Ansaugtrakt 102 sind - in Stromrichtung der angesaugten Luft gesehen - ein Meßsensor 105 für die Luftmenge oder Luftmasse mL, ein Verdichter 108 eines Turboladers, ein Drucksensor 112 zum Erfassen des Ladedrucks p2, ein Temperatursensor 110 zum Erfassen der Temperatur Tans der von der Brennkraftmaschine 100 angesaugten Luft und eine oder mehrere Einspritzdüsen 113 angeordnet. Der Verdichter 108 des Turboladers wird über eine Verbindungsleitung 114 von einer im Abgaskanal 104 angeordneten Turbine 116 angetrieben. Eine Bypassleitung 118 überbrückt die Turbine 116. In der Bypassleitung 118 ist ein Bypassventil 120 angeordnet, womit der vom Turbolader erzeugte Ladedruck gesteuert werden kann. Außerdem befinden sich an der Brennkraftmaschine 100 ein Klopfsensor 122, der bei einer klopfenden Verbrennung ein Klopfsignal K abgibt, ein Drehzahlsensor 123 zum Erfassen der Drehzahl nmot und ein Temperatursensor 124, der die Motortemperatur Tmot erfaßt. Die Brennkraftmaschine 100 besitzt beispielsweise vier Zylinder 125, die mit je einer Zündkerze bestückt sind.

Einem Steuergerät 126 werden folgende Signale zugeführt: Das Signal ml des Luftmengen- oder Luftmassenmessers 105, das Signal p2 des Drucksensors 112, das Signal Tans des Temperatursensors 110 für die Temperatur der angesaugten Luft, das Signal K des Klopfsensors 122, das Signal nmot des Drehzahlsensors 123, das Signal Tmot des Temperatursensors 124 für die Motortemperatur und das Signal αP eines Fahrpedalwertgebers 128. Ausgegeben werden vom Steuergerät 126 ein Signal wdksol für den Stellantrieb 107 der Drosselklappe 106, ein Signal ldtv zur Steuerung des Bypassventils 120 und ein Signal ti für die Zumessung des Kraftstoffes durch die Einspritzdüsen 113.

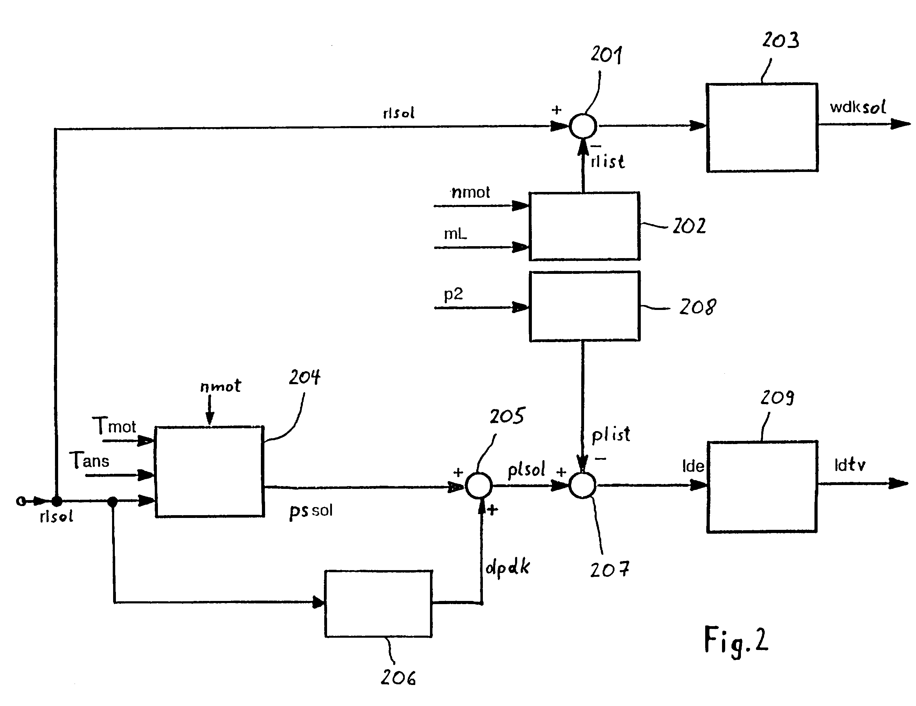

Das Steuergerät 126 enthält eine in Figur 2 dargestellte Schaltung zur Steuerung bzw. Regelung der Drosselklappenstellung und des Ladedrucks. Das Eingangssignal der in Figur 2 gezeigten Steuer- bzw.Regelanordnung ist ein Füllungs-Sollwert rlsol, der aus einer Drehmomentenvorgabe aufgrund verschiedener Eingriffe - wie z.B. Fahrpedalstellung, Geschwindigkeitsregelung, Getrieberegelung, Antischlupfregelung, etc. - errechnet wird. Da die Herleitung des Füllungs-Sollwertes rlsol nicht Gegenstand der Erfindung ist, wird hier nicht näher darauf eingegangen. Der Füllungs-Sollwert rlsol wird einem Verknüpfungspunkt 201 zugeführt, indem seine Ablage von einem Füllungs-Istwert rlist bestimmt wird. Der Füllungs-Istwert rlist (auch als Motorlast bezeichnet) wird in einem Schaltblock 202 in Abhängigkeit von der Motordrehzahl nmot und der angesaugten Luftmasse beziehungsweise -menge mL ermittelt. Ein Füllungsregler 203 leitet aus der Ablage zwischen dem Füllungs-Sollwert rlsol und dem Füllungs-Istwert rlist das Steuersignal wdksol für den Drosselklappen-Stellantrieb 107 ab.

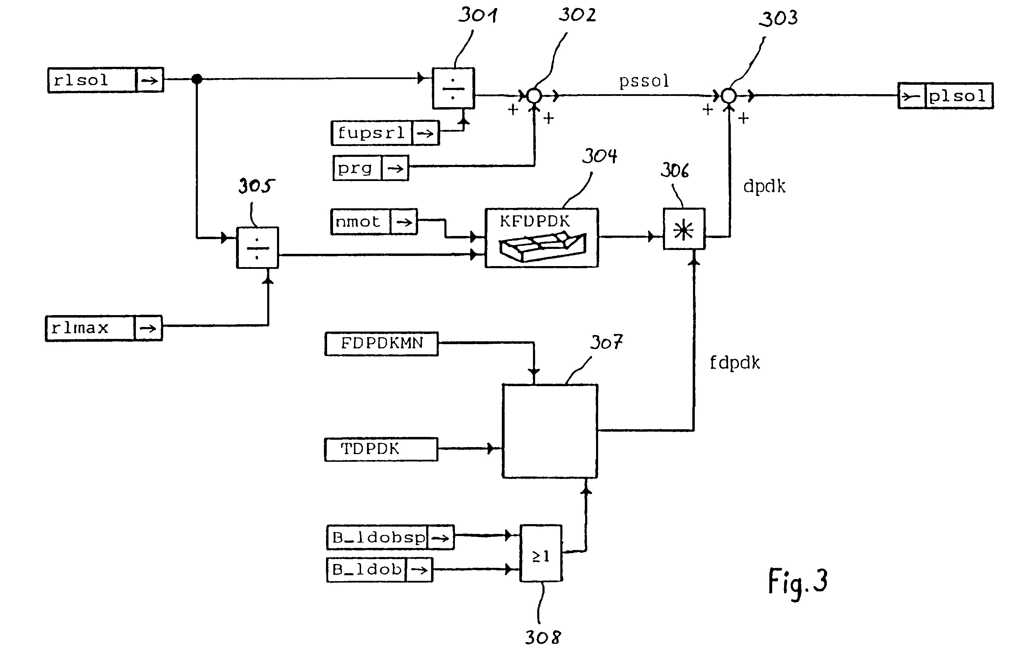

Aus dem Füllungs-Sollwert rlsol wird ebenfalls das Steuersignal ldtv für das den Ladedruck einstellende Bypassventil 120 hergeleitet. Dazu wird der Füllungs-Sollwert rlsol einem im Zusammenhang mit Figur 3 noch näher erläuterten Schaltblock 204 zugeführt, in dem in Abhängigkeit von der Motordrehzahl nmot, der Motortemperatur Tmot und der Ansauglufttemperatur Tans aus dem Füllungs-Sollwert rlsol ein Saugrohrdruck-Sollwert pssol abgeleitet wird. Diesem Saugrohrdruck-Sollwert pssol wird im Verknüpfungspunkt 205 ein Signal dpdk überlagert, welches einem Druckabfall an der Drosselklappe entspricht. Wie dieses Signal dpdk im Schaltblock 206 aus dem Füllungs-Sollwert rlsol und anderen Größen hergeleitet wird, wird anhand der Figur 3 dargelegt.

Das Ausgangssignal des Verknüpfungspunktes 205 entspricht einem Ladedruck-Sollwert plsol. Im Verknüpfungspunkt 207 wird die Ablage zwischen diesem Ladedruck-Sollwert plsol und dem Ladedruck-Istwert plist bestimmt. Den Ladedruck-Istwert plist leitet ein Schaltblock 8 aus dem Meßsignal p2 des Drucksensors 112 ab. Das Ablagesignal lde zwischen dem Ladedruck-Sollwert plsol und dem Ladedruck-Istwert plist wird einem Ladedruckregler (zum Beispiel PID-Regler) 209 zugeführt, welcher schließlich eine Stellgröße ldtv für das Bypassventil 120 des Turboladers abgibt.

Mit dem einem Druckabfall an der Drosselklappe entsprechenden Signal dpdk kann der Ladedruck-Sollwert plsol gegenüber dem Saugrohrdruck-Sollwert pssol beliebig vergrößert oder reduziert werden. Ist zum Beispiel aufgrund des Fahrerwunsches ein dynamischer Betrieb des Motors gefordert, wird also Wert auf eine gute Fahrbarkeit gelegt, so wird der Ladedruck-Sollwert plsol gegenüber dem Saugrohrdruck-Sollwert pssol erhöht. Die Maschine hat bei einem solchen Fahrmodus einen schlechten Wirkungsgrad und arbeitet nicht wirtschaftlich. Ist dagegen mehr ein guter Wirkungsgrad gefordert, nämlich im stationären Betrieb, so wird das Signal dpdk so weit verringert, daß der Ladedruck-Sollwert plsol in etwa dem Saugrohrdruck-Sollwert pssol entspricht. Man sieht, daß mit Hilfe des steuerbaren Druckabfalls dpdk an der Drosselklappe eine rasche Anpassung der Maschine an den jeweiligen Fahrmodus möglich ist.

Wie der Figur 3 zu entnehmen ist, wird der Saugrohrdruck-Sollwert pssol durch Quotientenbildung zwischen dem Füllungs-Sollwert rlsol und einem Faktor fupsrl in einem Dividierer 301 erzeugt. Dieser Faktor fupsrl kann zum Beispiel in Abhängigkeit von der Motordrehzahl nmot, der Motortemperatur Tmot und der Ansauglufttemperatur Tans aus einem Kennfeld abgeleitet werden (vergleiche Block 204 in Figur 2). Um zu dem Saugrohrdruck-Sollwert pssol zu gelangen, kann dem Quotienten aus dem Füllungs-Sollwert rlsol und dem Faktor fupsrl in dem Verzweigungspunkt 302 noch ein Signal prg überlagert werden, das den Partialdruck des Restgases im Brennraum angibt. Infolge der Ventilüberschneidung zwischen Auslaßende und Einlaßbeginn verbleibt Restgas im Brennraum, dessen Druck ca. 50...150 mb beträgt.

Wie bereits im Zusammenhang mit Figur 2 erörtert, wird dem Saugrohrdruck-Sollwert pssol in einem Verknüpfungspunkt 303 das einen Druckabfall an der Drosselklappe widergebende Signal dpdk überlagert, woraus schließlich der Ladedruck-Sollwert plsol entsteht. Das Signal dpdk wird einem Kennfeld KFDPDK entnommen, welches in einem Block 304 abgelegt ist. Der aus dem Kennfeld KFDPDK entnommene Wert des Signals dpdk hängt von der Motordrehzahl nmot und einem in einem Dividierer 305 gebildeten Verhältnis zwischen dem Füllungs-Sollwert rlsol und einem maximal erreichbaren Füllungswert rlmax ab. Dieser maximal erreichbare Füllungswert rlmax hängt beispielsweise von der Motordrehzahl nmot, dem vom Klopfsensor 122 ermittelten Klopfen des Motors, der Motortemperatur Tmot, der Ansauglufttemperatur Tans und der atmosphärischen Höhe ab.

Damit, wie vorangehend ausgeführt, das den Druckabfall an der Drosselklappe wiedergebenede Signal dpdk sehr flexibel an den Fahrmodus angepaßt werden kann, wird das Ausgangssignal des Kennfeldes KFDPDK in einem Verknüpfungspunkt 306 multiplikativ mit einem Korrekturfaktur fdpdk verknüpft, welcher in einem Schaltblock 307 erzeugt wird. Eingangssignale für diesen Schaltblock 307 sind ein Minimalwert FDPDKMN für den Korrekturfaktor, eine Zeitkonstante TDPDK und das Ausgangssignal einer Oder-Schaltung 308, welche eine Oder-Verknüpfung zwischen einem eine Overboost-Aktivierung anzeigenden Signal B_ldob und einem eine Overboost-Sperrzeit anzeigenden Signal B_ldobsp durchführt. Wenn der Fahrer durch Betätigen des Fahrpedals eine dynamische, sportliche Fahrweise signalisiert, und damit eines der beiden Signale B_ldob oder B_ldobsp an der Oder-Schaltung 308 anliegt, wird im Schaltblock 307 der Korrekturfaktor fdpdk auf den Wert 1 gesetzt, und er behält diesen Wert 1 bei, solange eines dieser beiden Signale anliegt. Ändert sich die Fahrweise und es erfolgt ein Übergang in den stationären Fahrbetrieb, so steuert der Schaltblock 307 den Korrekturfaktor fdpdk mit der Zeitkonstanten TDPDK von dem Wert 1 auf den zwischen 0 und 1 liegenden
Minimalwert FDPDKMN ab. Durch die Verringerung des Korrekturfaktors fdpdk wird auch das dem Saugrohrdruck-Sollwert pssol überlagerte Signal dpdk reduziert, womit der Druckabfall an der Drosselklappe zurückgeht mit dem Ziel, den Wirkungsgrad der Maschine zu optimieren. Der Korrekturfaktor fdpdk könnte auch durch ein vom Fahrer betätigbares Bedienelemen (z.B. Schalter) beeinflußt werden, um beispielsweise eine besonders sportliche Fahrweise vorzugeben.

## Patentansprüche

1. Verfahren zum Steuern oder Regeln der Leistung einer aufladbaren Brennkraftmaschine durch Steuerung oder Regelung der Stellung einer im Saugrohr vorhandenen Drosselklappe und des Ladedrucks, dadurch gekennzeichnet, daß aus einem vorgegebenen Füllungs-Sollwert (rlsol) eine
Stellgröße (wdksol) für die Drosselklappe (106) abgeleitet wird, daß aus dem Füllungs-Sollwert (rlsol) ein Saugrohrdruck-Sollwert (pssol) ermittelt wird und daß ein Ladedruck-Sollwert (plsol) durch Verknüpfen des Saugrohr-Sollwertes (pssol) mit einer Größe (dpdk) abgeleitet wird, welche einen Druckabfall an der Drosselklappe (106) vorgibt.

2. Verfahren nach Anspruch 1, dadurch gekennzeichnet, daß der Saugrohrdruck-Sollwert (pssol) aus dem Quotienten zwischen dem Füllungs-Sollwert (rlsol) und einem
Faktor (fupsrl), der von der Motordrehazhl (nmot), der Motortemperatur (Tmot) und der Temperatur (Tans) der angesaugten Luft abhängt, abgeleitet wird.

3. Verfahren nach Anspruch 2, dadurch gekennzeichnet, daß dem Saugrohrdruck-Sollwert der Partialdruck des Restgases (prg) additiv überlagert wird.

4. Verfahren nach Anspruch 1, dadurch gekennzeichnet, daß die Größe (dpdk) für den Druckabfall an der
Drosselklappe (106) aus einem Kennfeld (304) in Abhängigkeit von der Motordrehzahl (nmot) und dem
Füllungs-Sollwert (rlsol) herausgelesen wird.

5. Verfahren nach Anspruch 1, dadurch gekennzeichnet, daß die Größe (dpdk) für den Druckabfall an der
Drosselklappe (106) aus einem Kennfeld (304) in Abhängigkeit von der Motordrehzahl (nmot) und dem Verhältnis zwischen dem Füllungs-Sollwert (rlsol) und einem maximal erreichbaren Füllungswert (rlmax) herausgelesen wird.

6. Verfahren nach Anspruch 4 oder 5, dadurch gekennzeichnet, daß der aus dem Kennfeld (304) herausgelesene Wert mit einem Korrekturfaktur (fdpdk) beaufschlagt wird, der während eines dynamischen Fahrbetriebs auf einen höheren Wert gesetzt wird als während eines stationären Fahrbetriebs.

7. Verfahren nach Anspruch 6, dadurch gekennzeichnet, daß der Korrekturfaktur (fdpdk) bei dynamischem Fahrbetrieb auf den Wert 1 gesetzt wird und beim Übergang auf stationären Fahrbetrieb auf einen Wert, der zwischen 0 und 1 liegt, herabgesetzt wird.

8. Anordnung zur Steuerung der Leistung einer aufladbaren Brennkraftmaschine, welche die Stellung einer im Saugrohr vorhandenen Drosselklappe und den Ladedruck steuert oder regelt, dadurch gekennzeichnet, daß erste Mittel (201, 202) vorgesehen sind, die aus einem Füllungs-Sollwert (rlsol) eine Stellgröße (wdksol) für die Drosselklappe (106) ableiten, daß zweite Mittel (204) vorgesehen sind, die aus dem Füllungs-Sollwert (rlsol) einen Saugrohrdruck-Sollwert (pssol) ableiten und daß ein
Ladedruck-Sollwert (plsol) durch eine Verknüpfung (205) des Saugrohrdruck-Sollwertes (pssol) mit einer Größe (dpdk) entsteht, die einen Druckabfall an der Drosselklappe (106) vorgibt.

## Claims

1. Method of controlling or regulating the power of an internal combustion engine which can be supercharged, by regulating or controlling the boost pressure and the position of a throttle plate present in the suction pipe, characterized in that a regulating variable (wdksol) for the throttle plate (106) is derived from a specified required charge value (rlsol), in that a required suction pipe pressure value (pssol) is determined from the required charge value (rlsol) and in that a required boost pressure value (plsol) is derived by associating the required suction pipe value (pssol) with a variable (dpdk) which specifies a pressure drop at the throttle plate (106).

2. Method according to Claim 1, characterized in that the required suction pipe pressure value (pssol) is derived from the quotient of the required charge value (rlsol) and a factor (fupsrl), which depends on the engine rotational speed (nmot), the engine temperature (Tmot) and the temperature (Tans) of the induced air.

3. Method according to Claim 2, characterized in that the partial pressure of the residual gas (prg) is additively superimposed on the required suction pipe pressure value.

4. Method according to Claim 1, characterized in that the variable (dpdk) for the pressure drop at the throttle plate (106) is read from a characteristic diagram (304) as a function of the engine rotational speed (nmot) and the required charge value (rlsol) .

5. Method according to Claim 1, characterized in that the variable (dpdk) for the pressure drop at the throttle plate (106) is read from a characteristic diagram (304) as a function of the engine rotational speed (nmot) and the ratio between the required charge value (rlsol) and a maximum attainable charge value (rlmax).

6. Method according to Claim 4 or 5, characterized in that the value read from the characteristic diagram (304) is subjected to a correction factor (fdpdk) which is set during a dynamic driving operation to a higher value than during a steady-state driving operation.

7. Method according to Claim 6, characterized in that the correction factor (fdpdk) is set to the value 1 during dynamic driving operation and is lowered to a value, which is located between 0 and 1, on transition to steady-state driving operation.

8. Arrangement for controlling the power of an internal combustion engine which can be supercharged, which arrangement regulates or controls the boost pressure and the position of a throttle plate present in the suction pipe, characterized in that first means (201, 202) are provided which derive a regulating variable (wdksol) for the throttle plate (106) from a required charge value (rlsol), in that second means (204) are provided which derive a required suction pipe pressure value (pssol) from the required charge value (rlsol) and in that a required boost pressure value (plsol) arises due to an association (205) between the required suuction pipe pressure value (pssol) and a variable (dpdk) which specifies a pressure drop at the throttle plate (106).

## Revendications

1. Procédé de commande ou de régulation de la puissance d'un moteur à combustion interne suralimenté par la commande ou la régulation de la position d'un volet d'étranglement équipant la tubulure d'aspiration et de la pression d'alimentation,
caractérisé en ce qu'
• à partir d'une valeur de consigne de remplissage (rlsol), on déduit une grandeur de réglage (wdksol) du volet d'étranglement (106),
• à partir de la valeur de consigne de remplissage (rlsol), on détermine une valeur de consigne de la pression dans la tubulure d'aspiration (pssol) et
• on déduit une valeur de consigne de la pression d'alimentation (plsol) par combinaison de la valeur de consigne de pression dans la tubulure d'aspiration (pssol) à une grandeur (dpdk) qui prédéfinit une chute de pression sur le volet d'étranglement (106).

2. Procédé selon la revendication 1,
caractérisé en ce que
la valeur de consigne de la pression dans la tubulure d'aspiration (pssol) est obtenue à partir du quotient de la valeur de consigne de remplissage (rlsol) et d'un coefficient (fupsrl) déduit du régime du moteur (nmot), de sa température (Tmot) et de la température (Tans) de l'air aspiré.

3. Procédé selon la revendication 2,
caractérisé en ce qu'
on combine par addition la pression partielle du gaz résiduel (prg) à la valeur de consigne de la pression dans la tubulure d'aspiration.

4. Procédé selon la revendication 1,
caractérisé en ce qu'
on extrait la grandeur (dpdk) de la chute de pression sur le volet d'étranglement (106) d'un champ de caractéristiques (304) en fonction du régime du moteur (nmot) et de la valeur de consigne de remplissage (rlsol).

5. Procédé selon la revendication 1,
caractérisé en ce qu'
on extrait la grandeur (dpdk) de la chute de pression sur le volet d'étranglement (106) à partir d'un champ de caractéristiques (304) en fonction du régime du moteur (nmot) et du rapport entre la valeur de consigne de remplissage (rlsol) et une valeur de remplissage maximale possible (rlmax).

6. Procédé selon la revendication 4 ou 5,
caractérisé en ce qu'
on applique un coefficient de correction (fdpdk) à la valeur lue dans le champ de caractéristiques (304), coefficient qui est mis à une valeur plus élevée pendant le mode de fonctionnement dynamique que pendant le mode de fonctionnement stationnaire.

7. Procédé selon la revendication 6,
caractérisé en ce que
pour le mode de fonctionnement dynamique, on met le coefficient de correction (fdpdk) à la valeur 1 et au passage au mode de fonctionnement stationnaire, on le réduit à une valeur comprise entre 0 et 1.

8. Montage pour la commande de la puissance d'un moteur à combustion interne suralimenté commandant ou régulant la position d'un volet d'étranglement équipant la tubulure d'aspiration et la pression d'alimentation,
caractérisé en ce que
• des premiers moyens (201, 202) déduisent une grandeur de réglage (wdksol) du volet d'étranglement (106) à partir d'une valeur de consigne de remplissage (rlsol), des seconds moyens (204) déduisent une valeur de consigne de la pression dans la tubulure d'aspiration (pssol) à partir de la valeur de consigne de remplissage (rlsol), et
• on obtient une valeur de consigne de la pression d'alimentation (plsol) par une combinaison (205) de la valeur de consigne de la pression dans la tubulure d'aspiration (pssol) et d'une grandeur (dpdk) prédéfinissant une chute de tension sur le volet d'étranglement (106).
